# EUROPÄISCHE PATENTSCHRIFT

(11) **EP 1 802 516 B1**
(45) Veröffentlichungstag und Bekanntmachung des Hinweises auf die Patenterteilung: **06.05.2009**
(21) Anmeldenummer: 05777463.0
(22) Anmeldetag: 03.09.2005
(51) Int. Cl.: B62D 53/08, B62D 53/06

(54) **VERSCHIEBEVORRICHTUNG FÜR EINE SATTELKUPPLUNG**
SLIDING DEVICE FOR A FIFTH WHEEL COUPLING
DISPOSITIF DE DEPLACEMENT POUR UNE SELLETTE D'ATTELAGE

(30) Priorität: 18.09.2004 DE 102004045663
(43) Veröffentlichungstag der Anmeldung: 04.07.2007
(73) Patentinhaber: Jost-Werke GmbH, 63263 Neu-Isenburg (DE)
(72) Erfinder: ALGÜERA, José, 63739 Aschaffenburg (DE)
(74) Vertreter: Fuchs
(86) Internationale Anmeldenummer: PCT/EP2005/009482
(87) Internationale Veröffentlichungsnummer: WO 2006/029731

(56) Entgegenhaltungen:
- US-A- 5 314 201
- US-A- 5 617 072
- US-A- 5 863 057
- US-A- 5 915 713
- US-A1- 2003 047 907
- US-B1- 6 203 045
- US-B2- 6 736 420
- PATENT ABSTRACTS OF JAPAN Bd. 2003, Nr. 03, 5. Mai 2003 (2003-05-05) -& JP 2002 331971 A (HINO MOTORS LTD), 19. November 2002 (2002-11-19)

## Beschreibung

Die Erfindung betrifft eine Verschiebevorrichtung für eine Sattelkupplung gemäß der Merkmale des Oberbegriffs des Patentanspruchs 1.

Verschiebevorrichtungen sind Vorrichtungen, die die Sattelkupplung tragen und es erlauben, diese in Fahrzeuglängsrichtung zu verschieben und in verschiedenen Positionen zu verriegeln. Eine derartige Slider-Kupplung, die auf zwei als Zahnschienen ausgebildeten Führungsschienen aufgesetzt ist und auf diesen verschoben werden kann, offenbart die Gattungsgemäße JP 2002 331971 A. Die Verriegelungseinrichtung gemäß der bekannten Druckschrift greift in der verriegelten Stellung mit einem Verriegelungsschuh formschlüssig in die Zahnschienen ein. Hierfür umfasst die Verriegelungseinrichtung einen unterhalb der Sattelkupplungsplatte zugeordneten zweiseitig wirkenden Pneumatikzylinder, an dessen Kolbenstangen endseitig die Verriegelungsschuhe ausgebildet sind. An den Enden der Kolbenstangen befindet sich außerdem jeweils eine Platte, die mit einem Näherungsschalter zusammenwirkt. Sobald die Kolbenstange mit der Platte in eine eingefahrene Position verfahren wird, bewegt sich auch die Platte in Richtung des Näherungsschalters, wobei dieser ein Signal auslöst, welches wiederum in einen Steuerkreis einfließt.

Nach dem Verstellen der Verschiebevorrichtung, insbesondere beim Rangieren, kann es vorkommen, dass der Fahrer vergisst, die Mechanik der Verschiebevorrichtung zu schließen, d.h., die Sattelkupplung in der Position, in der sie sich befindet, zu verrasten. Dadurch kann es zu unkontrolliertem Verschieben während der Fahrt oder anderen gefährlichen Situationen kommen. Beispielsweise kann bei einer Bergabfahrt oder bei Motorbremsung die Aufliegerfront gegen das Fahrerhaus stoßen.

Weiterhin können bei bekannten Verschiebevorrichtungen Probleme hinsichtlich der Achslastverteilung und der Gesamtzuglänge entstehen. Falsche Achslasten können das Fahrverhalten beeinträchtigen, zu überhöhtem Verschleiß der Bereifung und zu einer ungünstigen Belastung der Achsen führen - bis hin zur Überschreitung der zugelassenen Grenzen. Auch hinsichtlich der zulässigen Gesamtlänge des Sattelzuges gibt es Grenzen zu berücksichtigen, die vom Gesetzgeber auf einen Maximalwert limitiert sein können. Umgekehrt kann es bei einem zu kurz eingestellten Sattelzug bei Kurvenfahrten zu Kollisionen zwischen der Aufliegerfront und der Fahrerkabine oder dem Aufbau der Sattelzugmaschine kommen. Weiterhin ist es bei den bekannten Verschiebevorrichtungen nachteilig, dass bei falsch eingestellter Sattelzuglänge in der Regel ein zeitraubender Einstellvorgang (in der Regel mit Aus- und Einsteigen des Fahrers) gefolgt von einer weiteren Überprüfung der geänderten Einstellung stattfinden muss, was insgesamt zeitaufwändig ist und somit die Wirtschaftlichkeit bei der Verwendung der Verschiebevorrichtung vermindert.

Verschiebevorrichtungen sind beispielsweise aus der DE-AS 17 80 488, der EP 0 503 954 A1 oder der DE 199 44 684 C1 bekannt.

Ferner ist aus der US 6,736,420 B2 eine Verschiebevorrichtung bekannt, die zwei Führungsschienen mit Zahnleisten aufweist, auf denen ein Schlitten verschiebbar gelagert ist, der die Sattelkupplung trägt. Am Schlitten ist eine Verriegelungseinrichtung mit Blockierstücken angeordnet, die in die Zahnleisten eingreifen.

Das eine Blockierstück ist an einem Öffnungshebel und das andere Blockierstück an einem Blockierstückhebel angelenkt, wobei beide Hebel miteinander verbunden sind. Der Öffnungshebel ist mit einer Betätigungseinrichtung, z. B. einem Zuggriffhebel zur manuellen Betätigung oder einem Druckmittelmotor verbunden. In Offenstellung nehmen beide Hebel eine Knickstellung und in Verriegelungsstellung der Verriegelungseinrichtung eine gestreckte Stellung ein. Auch bei dieser bekannten Verschiebevorrichtung ist es notwendig, dass der Fahrer die ordnungsgemäße Verriegelung des Schlittens visuell kontrolliert, bevor er losfährt.

Die Aufgabe der vorliegenden Erfindung besteht darin, die bei den bekannten Verschiebevorrichtungen auftretenden Probleme der Sicherheit bzw. Wirtschaftlichkeit beim Schließen der Verschiebevorrichtung und bei der Einstellung der Verschiebevorrichtung zu vermeiden oder zumindest zu verringern.

Die Aufgabe wird mit einer Verschiebevorrichtung gelöst, bei der ein erstes Blockierstück an einen mit der Betätigungseinrichtung verbundenen Öffnungshebel und ein zweites Blockierstück an einem Blockierstückhebel angelenkt ist und beide Hebel schwenkbar miteinander verbunden sind, so das beide Hebel in Offenstellung der Verriegelungseinrichtung eine erste Knickstellung und in Verriegelungsstellung eine zweite Knickstellung einnehmen, wobei der Verriegelungssensor derart angeordnet ist, dass er die zweite Knickstellung detektiert.

Der Ort der Anbringung des Verriegelungssensors richtet sich nach der Ausgestaltung der Verriegelungseinrichtung und gegebenenfalls auch nach der Art des Antriebs des Schlittens.

Der Schlitten kann manuell verschiebbar angeordnet sein oder bei angekuppeltem Auflieger durch Verfahren des Zugfahrzeugs verschoben werden. Die Verriegelungseinrichtung sieht ein Verriegeln des Schlittens an den Führungsschienen vor, so dass der Verriegelungssensor entweder an der Führungsschiene/ den Führungsschienen oder am Schlitten angeordnet sein kann, wobei die Anordnung am Schlitten bevorzugt ist, weil die Detektion der Verriegelungsstellung unabhängig von der Position des Schlittens auf den Führungsschienen durchgeführt werden kann.

Über die Anzeigeeinrichtung, an die der Verriegelungssensor angeschlossen ist, wird dem Fahrer mitgeteilt, ob sich die Verriegelungseinrichtung in der vorgesehenen Verriegelungsstellung befindet oder nicht. Es kann eine akustische und/oder optische Anzeige vorgesehen sein, die vorzugsweise im Fahrerhaus angeordnet ist.

Die Anzeigeeinrichtung kann permanent aktiv sein, d.h., der Verriegelungszustand und/oder der Öffnungszustand werden dauerhaft angezeigt. Es kann auch eine Kopplung mit der Fahrzeugzündung vorgesehen sein, so dass beim Einschalten der Zündung die aktuelle Stellung der Verriegelungseinrichtung angezeigt wird. Hierbei ist.es empfehlenswert, eine zusätzliche Kontrolleinrichtung vorzusehen, die die Funktionsfähigkeit des oder der Sensoren überprüft.

Wenn der Verriegelungssensor an die Fahrzeugelektronik angeschlossen ist, kann die Verknüpfung auch in der Weise erfolgen, dass ein Anfahren des Fahrzeugs oder ein Lösen der Bremsen dann nicht möglich ist, wenn die Verriegelungseinrichtung sich nicht in der Verriegelungsstellung befindet. Beim Verlassen der Verriegelungsstellung, z.B. während der Fahrt, kann über den Eingriff in die Fahrzeugelektronik auch ein Bremsvorgang eingeleitet werden.

Die Anzeigeeinrichtung und/oder Kontrolleinrichtung kann auch mit einer Steuereinrichtung verknüpft und/oder integriert sein, mittels derer die Verriegelungseinrichtung der Verschiebevorrichtung und/oder die Verriegelungseinrichtung der Sattelkupplung betätigt werden kann. Die Fembedienbarkeit der Sattelkupplung und/oder der Verschiebevorrichtung in Verbindung mit dem mindestens einen Verriegelungssensor der Verschiebevorrichtung erleichtert die Arbeit des Fahrer, weil alle Funktionen im Fahrerhaus zusammenlaufen und er nicht mehr aussteigen muss, um sich selbst von dem ordnungsgemäßen Verriegelungszustand insbesondere der Verschiebevorrichtung zu überzeugen.

Hierbei ist es von Vorteil, wenn sich die Hebel in der zweiten Knickstellung an einer Widerlagerplatte abstützen und der Verriegelungssensor an der Widerlagerplatte angeordnet ist. Vorzugsweise ist der Verriegelungssensor an der Rückseite der Widerlagerplatte angeordnet. Hierfür eignet sich insbesondere ein induktiver Sensor.

An einem der beiden Hebel kann ein Federelement angreifen, das die Hebel in der zweiten Knickstellung gegen die Widerlagerplatte drückt. Die Verriegelungseinrichtung kann dann als geschlossen betrachtet werden, wenn die Blockierstücke mit den Zahnleisten im Eingriff sind. Dies ist dann der Fall, wenn die beiden Hebel durch das Federelement gegen die Anschlagplatte gedrückt werden. Die Lage dieser Widerlagerplatte ist so gewählt, dass der gemeinsame Drehpunkt beider Hebel beim Verriegeln über die gestreckte Lage hinaus gelangen kann. In dieser zweiten Knickstellung nehmen die Hebel vorzugsweise einen stumpfen Winkel ein. Ein unbeabsichtigtes Lösen der Blockierstücke aus der Verriegelungsstellung hätte zur Folge, dass die beiden Hebel zunehmend in Richtung der Widerlagerplatte gedrückt werden. Ein Zurückbewegen der Hebel aus der zweiten Knickstellung in die gestreckte Lage und darüber hinaus ist nur möglich, wenn über die Betätigungseinrichtung die Verriegelungseinrichtung bewegt wird. Die Blockierstücke werden somit wirkungsvoll daran gehindert, sich aus ihrer Verriegelungsstellung herauszubewegen. Die Verriegelungseinrichtung ist somit geschlossen, was vom Verriegelungssensor detektiert wird.

Das Öffnen der Verriegelungseinrichtung erfolgt vorzugsweise dadurch, dass mittels eines pneumatischen Zylinders oder mit Handkraft der Öffnungshebel entgegen der Federkraft geöffnet wird.

Vorzugsweise kann die Betätigungseinrichtung in eine gesicherte und in eine ungesicherte Position gebracht werden, wobei in der gesicherten Position die Verriegelungsstellung der Verriegelungseinrichtung sicherbar ist und ein Sicherungssensor zur Detektion der gesicherten Position vorgesehen ist, wobei der Sicherungssensor ebenfalls an die Anzeigeeinrichtung und/oder an die Fahrzeugelektronik angeschlossen ist. Der Ort der Anbringung des Sicherungssensors hängt von der Ausgestaltung der Betätigungseinrichtung ab.

Eine bevorzugte Ausführungsform sieht vor, dass die Betätigungseinrichtung einen Zuggriffhebel aufweist, der ein erstes Rastmittel aufweist, das in Schließstellung der Verriegelungseinrichtung in ein zweites am Schlitten angeordnetes Rastmittel eingreift, wobei der Sicherungssensor derart angeordnet ist, dass er die Eingriffsstellung der Rastmittel detektiert.

Gemäß einer bevorzugten Ausführungsform ist das erste Rastmittel eine Rastausnehmung und das zweite Rastmittel ein Führungselement mit einem Schlitz, durch den der Zuggriffhebel gesteckt ist.

Der Sicherungssensor wird daher vorzugsweise in der Nähe des Zuggriffshebels, und zwar in der Nähe der Rastmittel angeordnet. Über die Detektierung des Sicherungssensors, die ebenfalls angezeigt wird, wird dem Fahrer die Information übermittelt, ob die gesamte Mechanik, bestehend aus den Blockierstücken sowie den Hebeln, verschlossen ist. In diesem Fall gilt die gesamte Mechanik als geschlossen und gesichert, da die Verrastung der Rastmittel als zweite mechanische Sicherung angesehen werden kann. Um die Blockierstücke zu entriegeln, muss erst die Verrastung gelöst und der Zuggriffhebel geöffnet werden. Erst dann ist es möglich, dass die Verriegelungseinrichtung aus ihrer Verriegelungsstellung bewegt werden kann.

Gemäß einer weiteren Ausführungsform kann die Betätigungseinrichtung eine fernbedienbare Antriebseinrichtung aufweisen, wobei in diesem Fall der Sicherungssensor an der Antriebseinrichtung angeordnet ist. Die Antriebseinrichtung kann einen Druckmittelmotor umfassen, der an dem Öffnungshebel angelenkt ist.

Die Sicherheit der Verschiebevorrichtung kann dadurch weiter verbessert werden, wenn ein Lastsensor zur Detektion der auf der Sattelkupplung aufliegenden Sattellast vorgesehen ist, wobei der Lastsensor ebenfalls an die Anzeigeeinrichtung und/oder die Fahrzeugelektronik angeschlossen ist. Der Lastsensor ist vorzugsweise auf dem Schlitten unter den Befestigungsmitteln der Sattelkupplung angeordnet. Als Sensoren können vorzugsweise Druckgeber oder Wägezellen Verwendung finden. Diese können beispielsweise im Bereich der Lagerschalen untergebracht werden, die sich zwischen den Lagerböcken und der Sattelkupplungsplatte befindet.

Mittels des oder der Lastsensoren kann ermittelt werden, mit welcher Last die Kupplungsplatte jeweils beaufschlagt ist. Bei einer stationären Sattelkupplung ist je nach geometrischer Positionierung der Sattelkupplung zwischen der Vorderachse und den Hinterachsen eine feste Aufteilung dieser Last auf die jeweiligen Achsen vorgegeben. Die Verschiebevorrichtung bietet die Möglichkeit, diese Lastverteilung entsprechend der Beladung des Aufliegers gezielt zu verändern, mit dem Vorteil, dass falsche Achslasten verhindert werden können. Solche falschen Achslasten können das Fahrverhalten beeinträchtigen, zu überhöhtem Verschleiß der Bereifung und ungünstiger Belastung der Achsen führen bis hin zur Überschreitung der zugelassenen Grenzwerte.

Die Achslasten lassen sich berechnen, wenn zusätzlich die Position der Sattelkupplung bekannt ist, d.h. wenn die Position des Schlittens relativ zu den Führungsschienen ermittelt werden kann. Es ist daher vor Vorteil, wenn mindestens ein Positionssensor ebenfalls an die Anzeigeeinrichtung und/oder die Fahrzeugelektronik angeschlossen ist.

Für die Ausgestaltung des Positionssensors gibt es verschiedene Möglichkeiten. Vorzugsweise ist der Positionssensor ein Abstandssensor. Sender und Empfänger des Abstandssensors sind auf dem Schlitten und der Führungsschiene angeordnet.

Wenn eine Antriebseinrichtung zum Bewegen des Schlittens vorgesehen ist, die mindestens eine Antriebsspindel aufweist, kann der Positionssensor ein Drehwinkelmesser sein.

Es ist von Vorteil, wenn die Antriebseinrichtung der Verschiebeeinrichtung eine elektronisch geregelte Motoreinheit umfasst. Vorzugsweise ist die elektronisch geregelte Motoreinheit zum Verschieben des Schlittens in Abhängigkeit von der über den Lastsensor ermittelten Sattellast ausgebildet ist. Die Verfahrstrecke sowie die neue Position der Sattelkupplung werden hierbei in Abhängigkeit der Sattellast errechnet.

Für die genannten Sensoren können insbesondere induktive Sensoren, Magnetsensoren, Kraftsensoren, Drucksensoren oder Reet-Sensoren eingesetzt werden.

Beispielhafte Ausführungsformen der Erfindung werden nachfolgend anhand der Zeichnungen näher erläutert.

**Es zeigen:**
- Figur 1: eine schematische Darstellung eines Sattelzugs mit einer Sattelkupplung und einer Verschiebevorrichtung,
- Figur 2: eine Draufsicht auf einen Ausschnitt einer erfindungsgemäßen Verschiebevorrichtung in geschlossener Position der Verriegelungseinrichtung,
- Figur 3: einen Ausschnitt aus Figur 2,
- Figur 4: eine Draufsicht auf einen Ausschnitt der erfindungsgemäßen Verschiebevorrichtung in Offenstellung der Verriegelungseinrichtung.
- Figur 5: einen Ausschnitt aus Figur 4,
- **Figuren** 6a und 6b: eine Verschiebevorrichtung mit pneumatischer Betätigungseinrichtung,
- Figur 7: eine Verschiebeeinrichtung mit einer spindelgetriebenen Antriebseinrichtung,
- Figur 8a: einen Vertikalschnitt durch eine Verschiebeeinrichtung mit Sattelkupplung und Lastsensor und
- Figur 8b: eine vergrößerte Darstellung der Einzelheit Z der Figur 8a.

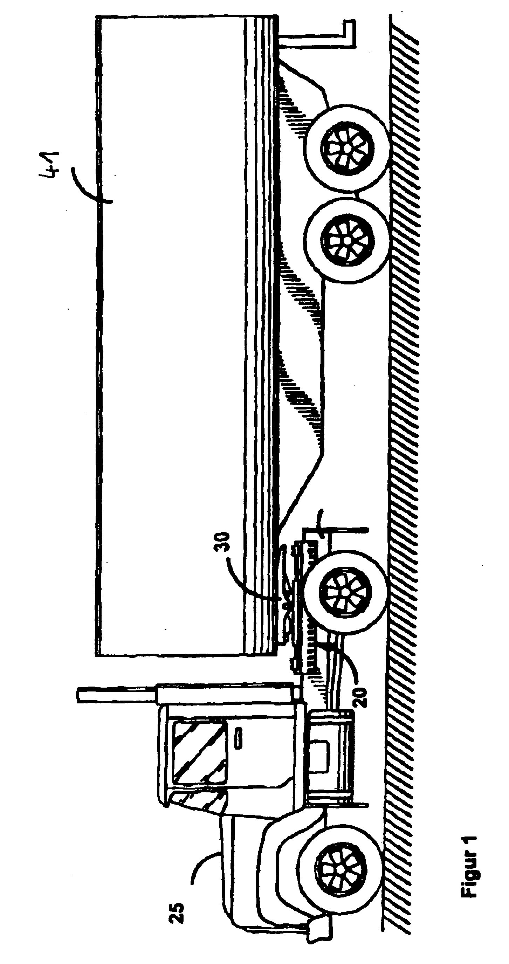

In der Figur 1 ist schematisch ein Sattelzug 40 mit einem Zugfahrzeug 25 und einem Auflieger 41 dargestellt. Der Sattelzug 40 weist eine Sattelkupplung 30 und eine Verschiebevorrichtung 20 auf, mit der die Sattelkupplung 30 in Längsrichtung des Zugfahrzeugs 25 verschiebbar ist.

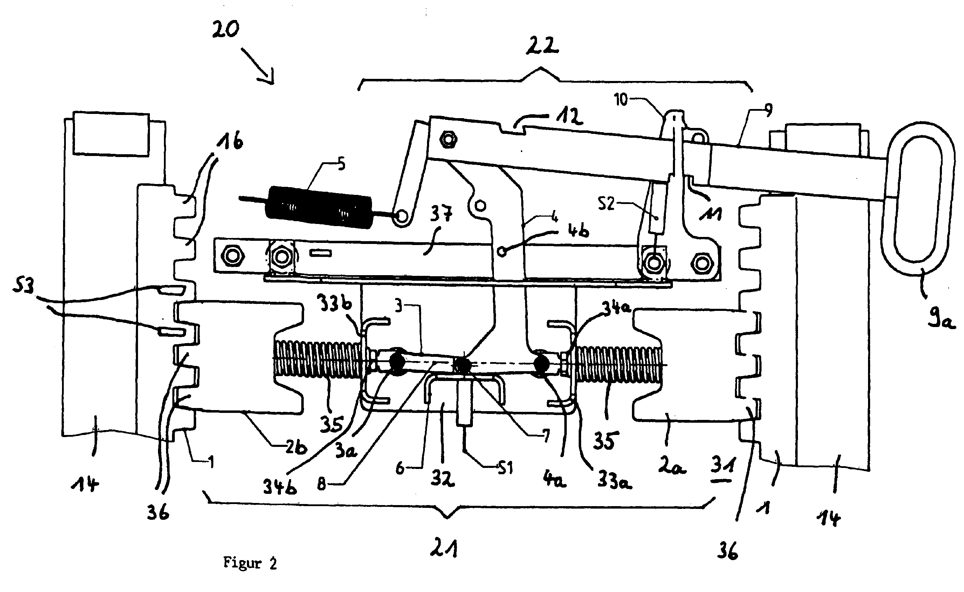

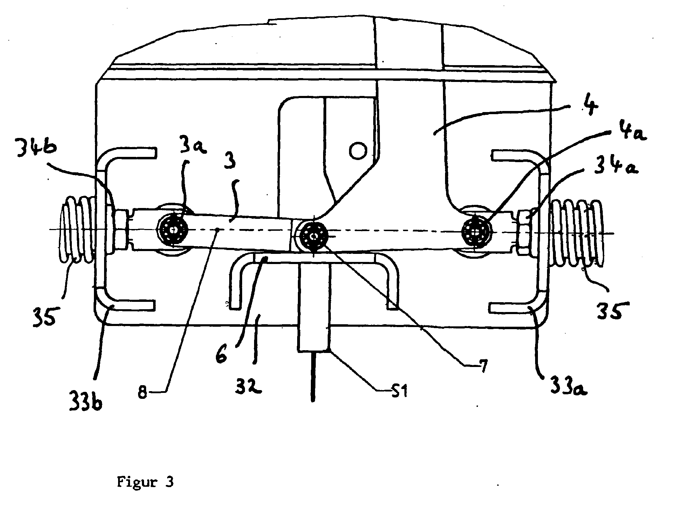

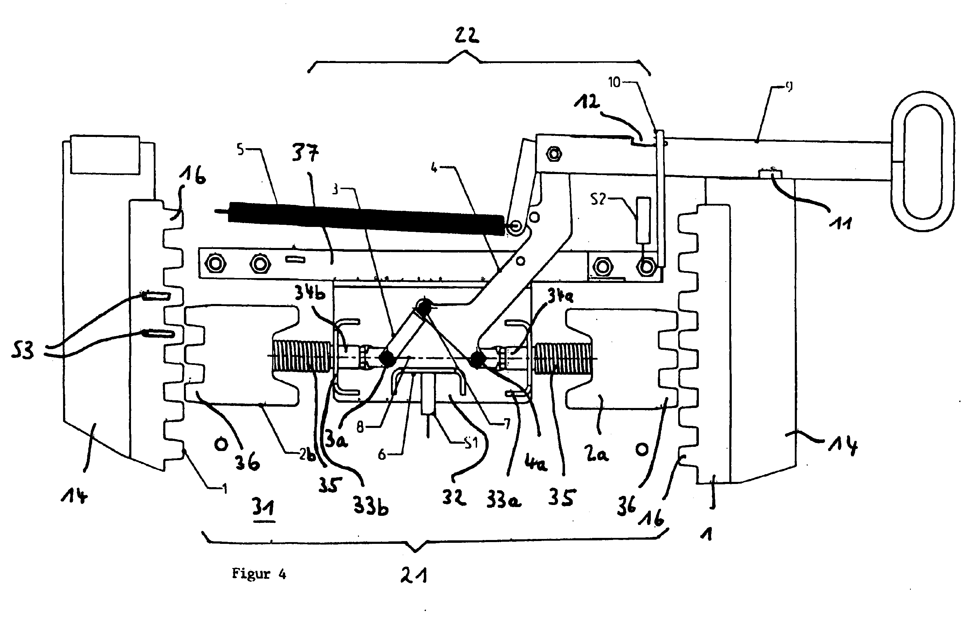

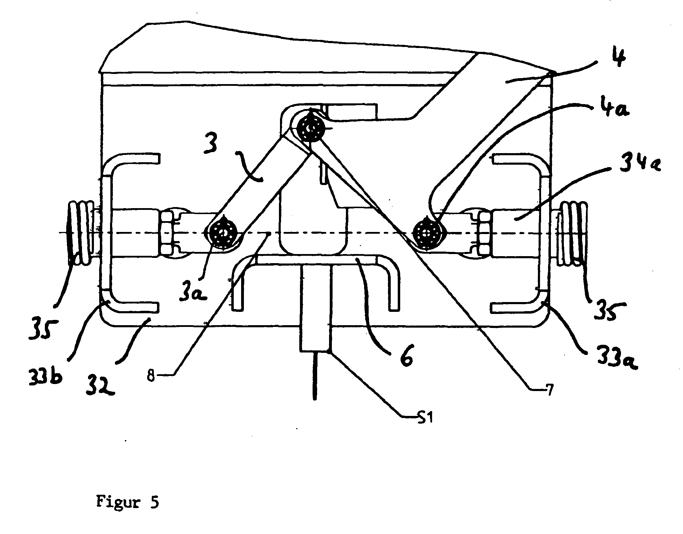

In den Figuren 2 und 5 sind jeweils Draufsichten auf einen Ausschnitt einer erfindungsgemäßen Verschiebevorrichtung 20 dargestellt. Die Verriegelungseinrichtung 21 ist erfindungsgemäß in eine offene und eine geschlossene Position einstellbar. In den Figuren 2 und 3 ist die geschlossene Position oder Verriegelungsstellung der Verriegelungseinrichtung 21 dargestellt und in den Figuren 4 und 5 ist die offene Position oder Offenstellung dargestellt.

Auf dem Zugfahrzeug 25 sind parallel zueinander angeordnete Führungsschienen 14 mit Zahnleisten 1 und Zähnen 16 befestigt. Die Zähne 16 sind jeweils nach innen weisend angeordnet und liegen in einer gemeinsamen Ebene.

Auf den Führungsschienen 14 ist ein Schlitten 31 verschiebbar angeordnet, dessen Rahmen in der Figur 2 nicht dargestellt ist. Auf dem Schlitten 31 ist eine Grundplatte 32 befestigt, auf der die Verriegelungseinrichtung 21 angeordnet ist. Auf der Grundplatte 32 sind zwei Führungselemente 33a,33b für die Blockierstücke 2a,2b befestigt, die mit ihren Führungsbolzen 34a, b in den Führungselementen 33a,33b verschiebbar gelagert sind. Die Blockierstücke 2a,2b besitzen Blockierzähne 36, die in der in Figur 2 gezeigten Verriegelungsstellung in die Lücken zwischen den Zähnen 16 der Zahnleisten 1 eingreifen. Mittels der Druckfedern 35, die auf den Führungsbolzen 34a,34b angeordnet sind und sich an den Führungselementen 33a,33b abstützen, werden die Blockierstücke 2a,2b in ihre Verriegelungsstellung gedrückt.

Am Führungsbolzen 34a ist ein im Wesentlichen T-förmiger Öffnungshebel 4 im Gelenkpunkt 4a und am Führungsbolzen 34b ist ein Blockierstückhebel 3 im Gelenkpunkt 3a befestigt. Beide Hebel 3,4 sind gelenkig miteinander verbunden und besitzen einen gemeinsamen Gelenkpunkt 7.

Der Öffnungshebel 4 ist auf einer Traverse 37 des Schlittens 31 im Gelenkpunkt 4b schwenkbar gelagert.

Am freien Ende des Öffnungshebels 4 greift die Betätigungseinrichtung 22 an, die einen Zuggriffhebel 9 mit Griff 9a und eine Zugfeder 5 umfasst, welche den Öffnungshebel 4 in die in Figur 2 gezeigte zweite Knickstellung zieht.

Durch Ziehen am Griff 9a gegen die Kraft der Feder 5 wird der Öffnungshebel 4 verschwenkt, wodurch die Blockierstücke 2a,2b sich aus der Verriegelungsstellung lösen und in Offenstellung bewegt werden, wie dies in der Figur 4 zu sehen ist, die die erste Knickstellung der Hebel 3,4 zeigt.

In der Figur 2 liegt der Gelenkpunkt 7 außerhalb der Verbindungslinie 8 der beiden Gelenkpunkte 3a,4a, so dass die beiden Hebel 3,4 die zweite Knickstellung einnehmen. Die Hebel 3,4 bilden bezüglich der Gelenkpunkte 3a,7,4a einen stumpfen Winkel, wobei die Hebel 3,4 im Bereich des gemeinsamen Gelenkpunktes 7 an einer Widerlagerplatte 6 anliegen. Die zweite Knickstellung hat den Vorteil, dass in der Verriegelungsstellung ein Lösen der Blockierstücke 2a,2b aus der Verriegelungsstellung nicht möglich ist, weil in diesem Fall der gemeinsame Gelenkpunkt 7 zunehmend gegen die Widerlagerplatte 6 gedrückt wird. Hinter der Widerlagerplatte 6 ist der Verschlusssensor S1 angeordnet, der an eine nicht dargestellte Anzeigeeinrichtung im Führerhaus des Zugfahrzeugs 25 angeschlossen ist.

Der Öffnungshebel 9 steckt in einem Schlitz des Führungsstücks 10, das an der Traverse 37 befestigt ist. Der Öffnungshebel 9 verfügt über zwei auf gegenüberliegenden Seiten angeordneten Rastausnehmungen 11,12. In der in Figur 2 gezeigten Verriegelungsstellung greift der Rand des Schlitzes des Führungsstücks 10 in die Rastausnehmung 11 ein, so dass der Zuggriffhebel 9 fixiert und gesichert ist. Diese Sicherungsstellung wird von einem Sicherungssensor S2 detektiert, der benachbart zu dem Führungsstück 10 derart angeordnet ist, dass er die Anwesenheit des eingerasteten Zuggriffhebels 9 detektiert. Auch dieser Sicherungssensor 2 ist an eine im Führerhaus angeordnete Anzeigeeinrichtung angeschlossen.

In der Figur 3 ist der Bereich der Verriegelungseinrichtung 21 an der Widerlagerplatte 6 vergrößert dargestellt. Es ist deutlich zu sehen, dass die beiden Hebel 3,4 bezüglich ihrer Gelenkpunkte 4a,3a und 7 ein Dreieck mit stumpfen Winkel bilden, wobei der gemeinsame Gelenkpunkt 7 außerhalb der Verbindungslinie 8 der Gelenkpunkte 3a,4a liegt.

In den Figuren 4 und 5 ist die Offenstellung der Verriegelungseinrichtung 21 dargestellt. Zum Öffnen wurde der Zuggriffhebel 9 aus der Verrastung gelöst und in Pfeilrichtung gezogen. Hierbei wird die am Öffnungshebel 4 angelenkte Zugfeder 5 gespannt und der Öffnungshebel 4 um den Gelenkpunkt 4a verschwenkt. Aufgrund der T-förmigen Ausgestaltung des Öffnungshebels 4 wird der gemeinsame Gelenkpunkt 7 aus der zweiten Knickstellung, in der der Gelenkpunkt 7 an der Widerlagerplatte 6 anliegt, herausbewegt und über die Linie 8 hinaus verschwenkt, so dass die beiden Hebel 3,4 bezüglich ihrer Gelenkpunk 3a,4a und 7 die in Figur 4 gezeigte erste Knickstellung einnehmen. Diese Bewegung des Öffnungshebels 4 bewirkt, dass die Führungsbolzen 34a,34b aufeinander zu bewegt werden mit der Folge, dass die beiden Blockierstücke 2a,3a aus der Verriegelungsstellung gelöst werden. Die zweite Rastausnehmung 12 verhindert das Schließen der Verschlusseinrichtung 21 dadurch, dass sich der Zuggriffhebel 9 mit seiner zweiten Raste 12 am Führungsstück 10 abstützt bzw. am Rand des Schlitzes einhängt, obwohl die durch die Verschlussfeder 5 ausgeübte Kraft in Richtung auf die geschlossene Position hin weiterhin wirkt. Aus diesem Grund wird die zweite Rastausnehmung 12 auch als Einhängekante bezeichnet.

Gleichzeitig werden hierbei die Druckfedern 35 zusammengedrückt. In dieser Offenstellung ist der Schlitten 31 frei beweglich, so dass er zusammen mit der darauf angeordneten Sattelkupplung 30 in Fahrzeuglängsrichtung verschiebbar ist. Wenn die neue Position erreicht ist, wird der Zuggriffhebel 9 an der Einhängekante 12 gelöst und eingeschoben, wodurch aufgrund der Unterstützung der Federn 5 und 35 die Blockierstücke 2a,3a wieder in ihre Verriegelungsstellung bewegt werden.

In den Figuren 2 und 4 ist zusätzlich zu den bereits beschriebenen Ausführungsformen vorgesehen, dass die Verschiebevorrichtung 20 mindestens einen Positionssensor S3 aufweist, um die vorliegende Einstellposition der Sattelkupplung 30 aus einer Reihe von mehreren Einstellpositionen zu detektieren. Hierdurch ist es vorteilhaft möglich, dass die eingenommene Einstellposition - bzw. damit fest verbunden die Gesamtlänge des Sattelzugs - dem Fahrer insbesondere im Fahrerhaus angezeigt wird bzw. der Fahrer die Einstellposition abfragen kann. Beispielsweise sind Positionssensoren S3 im Bereich der Zahnschiene 1 angeordnet, die insbesondere als Magnetsensor, Druck- bzw. Kraftsensor oder dergleichen ausgebildet sein können.

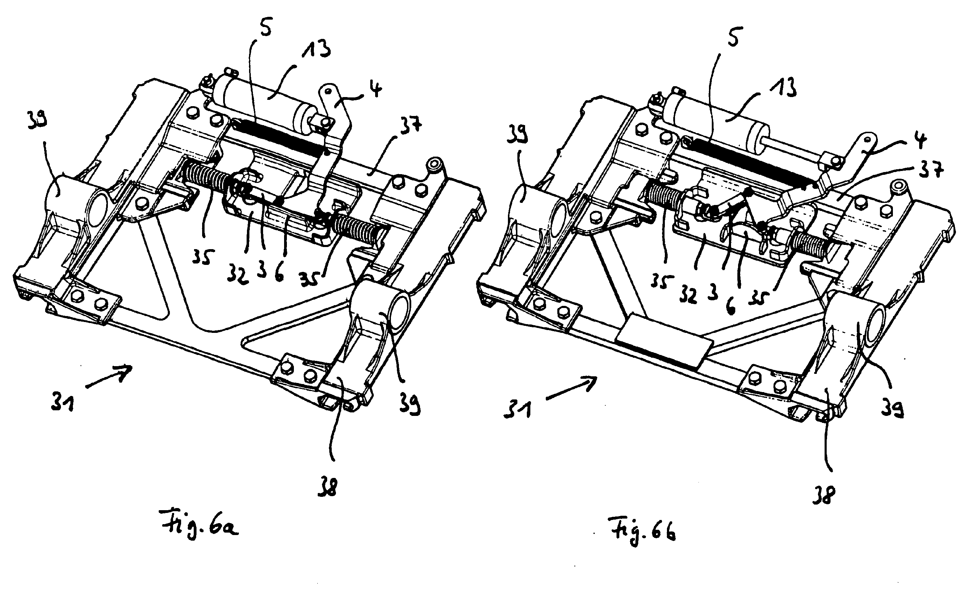

In den Figuren 6a und 6b ist der Schlitten 31 jeweils perspektivisch dargestellt, wobei die Figur 6a die Verriegelungs- und Figur 6b die Offenstellung zeigt. Auf dem Rahmen 38 des Schlittens 31 sind Lagerböcke 39 zur Aufnahme der nicht dargestellten Sattelkupplung angeordnet. Die Betätigungseinrichtung weist keinen Zuggriffhebel auf, sondern einen Druckmittelzylinder 13, der einerseits am Öffnungshebel 4 und andererseits am Rahmen 38 des Schlittens 31 befestigt ist. Dieser Druckmittelzylinder 13 wird vorzugsweise pneumatisch betrieben, so dass eine fernbedienbare Betätigung der Verriegelungseinrichtung 21 möglich ist.

An den Lagerböcken 39 ist im Bereich der in der Figur 6a, b nicht dargestellten Lagerschalen beidseitig jeweils ein Lastsensor S4 angeordnet. Dieser Lastsensor S4 ist ebenfalls an-die im Fahrerhaus angeordnete Anzeigeeinrichtung angeschlossen.

Ein solcher Lastsensor S4 bzw. eine Mehrzahl solcher Lastsensoren S4 sind beispielsweise als Druckgeber oder Wägezellen ausgebildet. Dadurch ist es erfindungsgemäß vorteilhaft möglich festzustellen, mit welcher Laste die Kupplungsplatte jeweils beaufschlagt ist. Für den Fall, dass ein Positionssensor S3 vorhanden ist, ist es möglich, aus den Signalen von Positionssensor S3 und Lastsensor S4 die jeweiligen Achslasten für jede einzelne Achse einer vorgegebenen Achsenkonfiguration der Zugmaschine zu ermitteln. Die Bereitstellung einer solchen Information, beispielsweise im Fahrerhaus, ermöglicht es dem Fahrer ein möglichst hohes Maß an Sicherheit und ein hohes Maß an Wirtschaftlichkeit beim Betrieb des Sattelzuges miteinander zu verbinden.

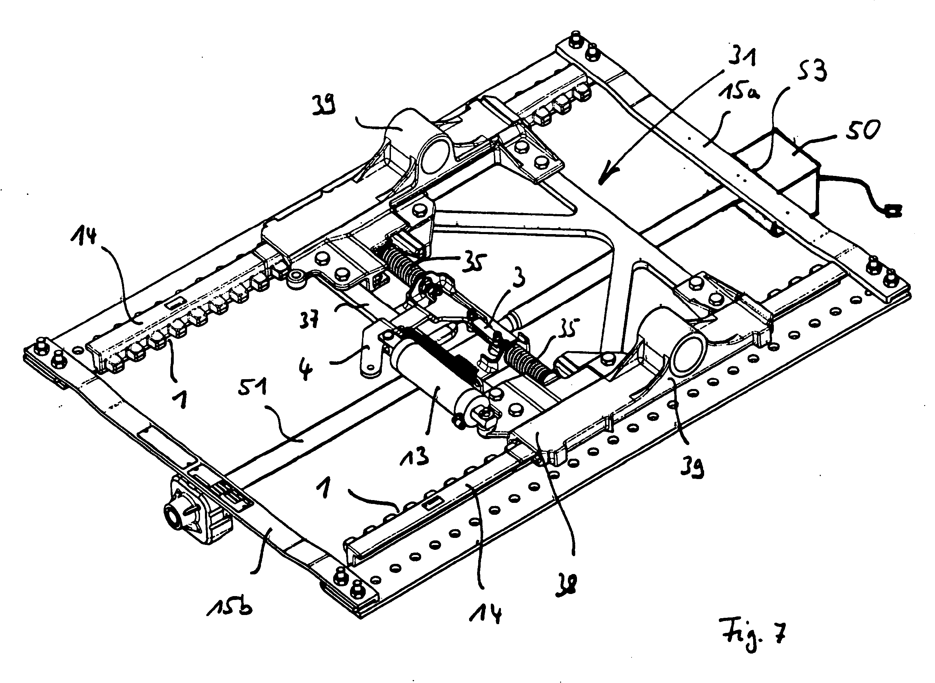

Die in der Figur 7 dargestellte Antriebseinrichtung des Schlittens 31 umfasst einen an der Querstrebe 15a befestigen Elektromotor 50, der eine am Schlitten 31 angreifende Antriebsspindel 51 antreibt. Die Antriebsspindel 51 ist an einer zweiten Querstrebe 15b gelagert. Der Positionssensor S3 ist ein Drehwinkelgeber, der am oder im Elektromotor 50 angeordnet ist.

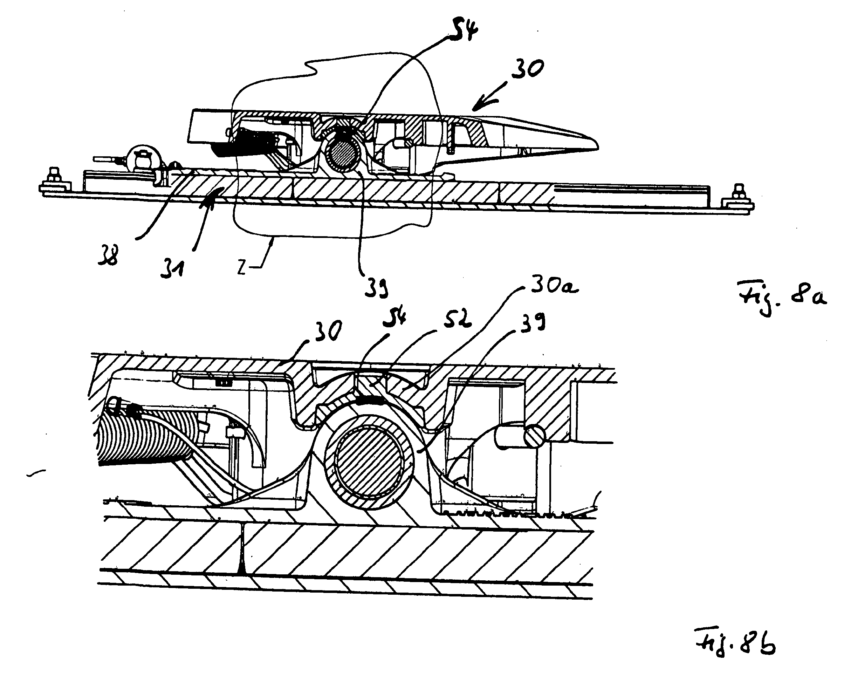

In den Figuren 8a und 8b ist die Lagerung der Sattelkupplung 30 auf dem Schlitten 31 der Verschiebeeinrichtung 20 dargestellt. Hierbei ist die Sattelkupplung 30 an den beiden Lagerböcken 39 schwenkbar angeordnet, wobei zwischen dem Lagerbock 39 und dem Lagerabschnitt 30a der Sattelkupplung eine Lagerschale 52 angeordnet ist. Der Lastsensor S4 befindet sich entweder innerhalb der Lagerschale 52 oder zwischen Lagerschale 52 und Lagerbock 39.

### Bezugszeichenliste

- 1: Zahnleiste
- 2a,b: Blockierstück
- 3: Blockierstückhebel
- 3a: Gelenkpunkt
- 4: Öffnungshebel
- 4a,b: Gelenkpunkt
- 5: Zugfeder
- 6: Widerlagerplatte
- 7: gemeinsamer Gelenkpunkt
- 8: Verbindungslinie
- 9: Zuggriffhebel
- 9a: Griff
- 10: Führungsstück
- 11: Rastausnehmung
- 12: Rastausnehmung
- 13: Druckmittelzylinder
- 14: Führungsschiene
- 15a, b: Querstrebe
- 16: Zahn
- 20: Verschiebevorrichtung
- 21: Verriegelungseinrichtung
- 22: Betätigungseinrichtung
- 25: Zugfahrzeug
- 30: Sattelkupplung
- 30a: Lagerabschnitt
- 31: Schlitten
- 32: Grundplatte
- 33a,b: Führungselement
- 34a,b: Führungsbolzen
- 35: Druckfeder
- 36: Blockierzahn
- 37: Traverse
- 38: Rahmen
- 39: Lagerbock
- 40: Sattelzug
- 41: Auflieger
- 50: Antriebseinrichtung
- 51: Antriebsspindel
- 52: Lagerschale
- S1: Verschlusssensor
- S2: Sicherungssensor
- S3: Positionssensor
- S4: Lastsensor

## Patentansprüche

1. Verschiebevorrichtung (20) für eine Sattelkupplung (30) mit zwei auf einem Fahrzeug, insbesondere auf einer Sattelzugmaschine (25), in dessen Längsrichtung angeordneten, Zahnleisten (1) aufweisenden Führungsschienen (14) und mit einem auf den Führungsschienen (14) verschiebbaren Schlitten (31), an dem eine Verriegelungseinrichtung (21) angeordnet ist,
wobei die Verriegelungseinrichtung mittels einer Betätigungseinrichtung (22) in eine Offenstellung sowie in eine Verriegelungsstellung bringbar ist und mindestens zwei in die beiden Zahnleisten (1) eingreifende Blockierstücke (2a, 2b) umfasst und
zur Detektion der Verriegelungsstellung mindestens ein an eine Anzeigeeinrichtung und/oder an die Fahrzeugelektronik angeschlossener Verriegelungssensor (S1) vorgesehen ist,
**dadurch gekennzeichnet,**
**dass** das erste Blockierstück (2a) an einen mit der Betätigungseinrichtung (22) verbundenen Öffnungshebel (4) und das zweite Blockierstück (2b) an einen Blockierstückhebel (3) angelenkt ist und beide Hebel (3, 4) schwenkbar miteinander verbunden sind, so dass beide Hebel (3, 4) in Offenstellung der Verriegelungseinrichtung (22) eine erste Knickstellung und in Verriegelungsstellung eine zweite Knickstellung einnehmen, wobei der Verriegelungssensor (S1) derart angeordnet ist, dass er die zweite Knickstellung detektiert.

2. Verschiebevorrichtung (20) nach Anspruch 1, **dadurch gekennzeichnet, dass** sich die Hebel (3,4) in der zweiten Knickstellung an einer Widerlagerplatte (6) abstützen und dass der Verriegelungssensor (S1) an der Widerlagerplatte (6) angeordnet ist.

3. Verschiebevorrichtung (20) nach Anspruch 2, **dadurch gekennzeichnet, dass** der Verriegelungssensor (S1) an der Rückseite der Widerlagerplatte (6) angeordnet ist.

4. Verschiebevorrichtung (20) nach einem der Ansprüche 2 oder 3, **dadurch gekennzeichnet, dass** an einem der beiden Hebel (3,4) ein Federelement (5) angreift, das die Hebel in der zweiten Knickstellung gegen die Widerlagerplatte (6) drückt.

5. Verschiebevorrichtung (20) nach einem der Ansprüche 1 bis 4, **dadurch gekennzeichnet, dass** die Hebel (3,4) in der zweiten Knickstellung einen stumpfen Winkel einnehmen.

6. Verschiebevorrichtung (20) nach einem der Ansprüche 1 bis 5, **dadurch gekennzeichnet, dass** die Betätigungseinrichtung (22) in eine gesicherte und eine ungesicherte Position bringbar ist, wobei in der gesicherten Position die Verriegelungsstellung der Verriegelungseinrichtung (21) sicherbar ist und dass ein Sicherungssensor (S2) zur Detektion der gesicherten Position vorgesehen ist, wobei der Sicherungssensor (S2) an eine Anzeigeeinrichtung und/oder an die Fahrzeugelektronik angeschlossen ist.

7. Verschiebevorrichtung (20) nach Anspruch 6, **dadurch gekennzeichnet, dass** die Betätigungseinrichtung (22) einen Zuggriffhebel (9) aufweist der ein erstes Rastmittel (11) aufweist, das in Verriegelungsstellung der Verriegelungseinrichtung (21) in ein zweites am Schlitten (31) angeordnetes Rastmittel eingreift, und
dass der Sicherungssensor (S2) derart angeordnet ist, dass er die Eingriffsstellung der Rastmittel detektiert.

8. Verschiebevorrichtung (20) nach Anspruch 7, **dadurch gekennzeichnet, dass** das erste Rastmittel eine Rastausnehmung (11) und das zweite Rastmittel (12) ein Führungselement (10) mit einem Schlitz ist, durch den der Zuggriffhebel (9) gesteckt ist.

9. Verschiebevorrichtung (20) nach einem der Ansprüche 7 oder 8, **dadurch gekennzeichnet, dass** die Betätigungseinrichtung (22) eine fernbedienbare Antriebseinrichtung (13) aufweist und dass der Sicherungssensor (S2) an der Antriebseinrichtung (13) angeordnet ist.

10. Verschiebevorrichtung (20) nach Anspruch 9, **dadurch gekennzeichnet, dass** die Antriebseinrichtung mindestens einen Druckmittelmotor (13) umfasst, der an den Öffnungshebel (9) angreift.

11. Verschiebevorrichtung (20) nach einem der Ansprüche 1 bis 10, **gekennzeichnet durch** mindestens einen Lastsensor (S4) zur Detektion der auf der Sattelkupplung (30) aufliegenden Sattellast, wobei der Lastsensor (S4) an eine Anzeigeeinrichtung und/oder an die Fahrzeugelektronik angeschlossen ist.

12. Verschiebevorrichtung (20) nach Anspruch 11, **dadurch gekennzeichnet, dass** der Lastsensor (S4) auf dem Schlitten (31) unter dem Befestigungsmittel der Sattelkupplung (30) angeordnet ist.

13. Verschiebevorrichtung (20) nach einem der Ansprüche 1 bis 12, **gekennzeichnet durch** mindestens einen Positionssensor (S3) zur Detektion der Position des Schlittens (31) relativ zu den Führungsschienen (14) wobei der Positionssensor (S3) an eine Anzeigeeinrichtung und/oder an die Fahrzeugelektronik angeschlossen ist.

14. Verschiebevorrichtung (20) nach Anspruch 13, **dadurch gekennzeichnet, dass** der Positionssensor (S3) ein Abstandssensor ist.

15. Verschiebevorrichtung (20) nach Anspruch 13, **gekennzeichnet durch** eine Antriebseinrichtung (50) zum Bewegen des Schlittens (31) auf den Führungsschienen (14).

16. Verschiebevorrichtung nach Anspruch 15, **dadurch gekennzeichnet, dass** die Antriebseinrichtung (50) mindestens eine Antriebsspindel (51) umfasst, wobei der Positionssensor (S3) ein Drehwinkelmesser ist.

17. Verschiebevorrichtung nach Anspruch 15, **dadurch gekennzeichnet, dass** die Antriebseinrichtung (50) eine elektronisch geregelte Motoreinheit umfasst.

18. Verschiebeeinrichtung nach Ansprüche 12 und 17, **dadurch gekennzeichnet, dass** die Motoreinheit zum Verschieben des Schlittens (31) in Abhängigkeit von der über den Lastsensor ermittelten Sattellast ausgebildet ist.

19. Verschiebevorrichtung (20) nach einem der Ansprüche 1 bis 17, **dadurch gekennzeichnet, dass** die Sensoren (S1 bis S4) induktive Sensoren, Magnetsensoren, Kraftsensoren, Drucksensoren oder Reet-Sensoren sind.

## Claims

1. Sliding device (20) for a fifth wheel coupling (30) having two guide rails (14) comprising toothed beams (1) and disposed on a vehicle, in particular on a tractor (25), in its longitudinal direction, and having a slide (31) which can be displaced on the guide rails (14) and on which a locking device (21) is disposed,
wherein the locking device can be brought into an open position and into a locked position by means of an actuation device (22) and includes at least two locking pieces (2a, 2b) engaging into the two toothed beams (1), and at least one locking sensor (S1) connected to a display device and/or to the vehicle electronics is provided for detecting the locked position,
**characterised in that**
the first locking piece (2a) is coupled to an opening lever (4) connected to the actuation device (22) and the second locking piece (2b) is coupled to a locking piece lever (3) and the two levers (3, 4) are connected together in a pivotable manner so that the two levers (3, 4) assume a first bent position when the locking device (22) is in the open position and assume a second bent position in the locked position, wherein the locking sensor (S1) is disposed such that it detects the second bent position.

2. Sliding device (20) as claimed in Claim 1, **characterised in that** the levers (3, 4) are supported on an abutment plate (6) in the second bent position, and **in that** the locking sensor (S1) is disposed on the abutment plate (6).

3. Sliding device (20) as claimed in Claim 2, **characterised in that** the locking sensor (S1) is disposed on the rear side of the abutment plate (6).

4. Sliding device (20) as claimed in any one of Claims 2 or 3, **characterised in that** a spring element (5) acts upon one of the two levers (3, 4) and presses the lever against the abutment plate (6) in the second bent position.

5. Sliding device (20) as claimed in any one of Claims 1 to 4, **characterised in that** the levers (3, 4) assume an obtuse angle in the second bent position.

6. Sliding device (20) as claimed in any one of Claims 1 to 5, **characterised in that** the actuation device (22) can be brought into a secured and an unsecured position, wherein in the secured position the locked position of the locking device (21) can be secured, and **in that** a securing sensor (S2) is provided for detecting the secured position, wherein the securing sensor (S2) is connected to a display device and/or the vehicle electronics.

7. Sliding device (20) as claimed in Claim 6, **characterised in that** the actuation device (22) comprises a pull-handle lever (9) which comprises a first latching means (11) which in the locked position of the locking device (21) engages into a second latching means disposed on the slide (31), and **in that** the securing sensor (S2) is disposed such that it detects the engaged position of the latching means.

8. Sliding device (20) as claimed in Claim 7, **characterised in that** the first latching means is a latching recess (11) and the second latching means (12) is a guide element (10) having a slot, through which the pull-handle lever (9) extends.

9. Sliding device (20) as claimed in any one of Claims 7 or 8, **characterised in that** the actuation device (22) comprises a drive device (13) which can be controlled remotely, and **in that** the securing sensor (S2) is disposed on the drive device (13).

10. Sliding device (20) as claimed in Claim 9, **characterised in that** the drive device includes at least one pressure medium motor (13) which acts upon the opening lever (9).

11. Sliding device (20) as claimed in any one of Claims 1 to 10, **characterised by** at least one load sensor (S4) for detecting the fifth wheel load on the fifth wheel coupling (30), wherein the load sensor (S4) is connected to a display device and/or to the vehicle electronics.

12. Sliding device (20) as claimed in Claim 11, **characterised in that** the load sensor (S4) is disposed on the slide (31) beneath the attachment means of the fifth wheel coupling (30).

13. Sliding device (20) as claimed in any one of Claims 1 to 12, **characterised by** at least one positional sensor (S3) for detecting the position of the slide (31) relative to the guide rails (14), wherein the positional sensor (S3) is connected to a display device and/or to the vehicle electronics.

14. Sliding device (20) as claimed in Claim 13, **characterised in that** the positional sensor (S3) is a distance sensor.

15. Sliding device (20) as claimed in Claim 13, **characterised by** a drive device (50) for moving the slide (31) on the guide rails (14).

16. Sliding device as claimed in Claim 15, **characterised in that** the drive device (50) includes at least one drive shaft (51), wherein the positional sensor (S3) is an angle of rotation measuring means.

17. Sliding device as claimed in Claim 15, **characterised in that** the drive device (50) includes an electronically controlled motor unit.

18. Sliding device as claimed in Claims 12 and 17, **characterised in that** the motor unit is configured to displace the slide (31) in dependence upon the fifth wheel load detected via the load sensor.

19. Sliding device (20) as claimed in any one of Claims 1 to 17, **characterised in that** the sensors (S 1 to S4) are inductive sensors, magnetic sensors, force sensors, pressure sensors or reed sensors.

## Revendications

1. Dispositif de déplacement (20) pour une sellette d'attelage (30) doté de deux rails de guidage (14) comprenant des baguettes dentées (1) disposées sur un véhicule, en particulier sur un tracteur de semi-remorque (25), dans la direction longitudinale de celui-ci, et doté d'un coulisseau (31) pouvant être déplacé sur les rails de guidage (14) et sur lequel est disposé un dispositif de verrouillage (21),
le dispositif de verrouillage pouvant être amené au moyen d'un dispositif d'actionnement (22) dans une position ouverte ainsi que dans une position verrouillée et comportant au moins deux pièces de blocage (2a, 2b) se mettant en prise dans les deux baguettes dentées (1) et
au moins un capteur de verrouillage (S1) raccordé à un dispositif d'affichage et/ou à l'électronique du véhicule étant prévu pour détecter la position verrouillée,
**caractérisé en ce que**
la première pièce de blocage (2a) est articulée sur un levier d'ouverture (4) relié au dispositif d'actionnement (22) et la seconde pièce de blocage (2b) est articulée sur un levier de pièce de blocage (3) et les deux leviers (3, 4) sont reliés l'un à l'autre de façon pivotante, de sorte que les deux leviers (3, 4), lorsque le dispositif de verrouillage (22) se trouve en position ouverte, occupent une première position coudée et, lorsqu'il se trouve en position verrouillée, occupent une seconde position coudée, le capteur de verrouillage (S1) étant disposé de telle sorte qu'il détecte la seconde position fléchie.

2. Dispositif de déplacement (20) selon la revendication 1, **caractérisé en ce que** les leviers (3, 4) dans la seconde position coudée s'appuient contre une plaque de butée (6) et **en ce que** le capteur de verrouillage (S1) est disposé sur la plaque de butée (6).

3. Dispositif de déplacement (20) selon la revendication 2, **caractérisé en ce que** le capteur de verrouillage (S1) est disposé sur la face arrière de la plaque de butée (6).

4. Dispositif de déplacement (20) selon l'une quelconque des revendications 2 ou 3, **caractérisé en ce qu'**un élément formant ressort (5) s'applique contre un des deux leviers (3, 4), lequel presse les leviers dans la seconde position coudée contre la plaque de butée (6).

5. Dispositif de déplacement (20) selon l'une quelconque des revendications 1 à 4, **caractérisé en ce que** les leviers (3, 4) dans la seconde position coudée enferment un angle obtus.

6. Dispositif de déplacement (20) selon l'une quelconque des revendications 1 à 5, **caractérisé en ce que** le dispositif d'actionnement (22) peut être amené dans une position bloquée et une position débloquée, la position verrouillée du dispositif de verrouillage (21) pouvant être bloquée dans la position bloquée et **en ce qu'**un capteur de blocage (S2) destiné à détecter la position bloquée est prévu, le capteur de blocage (S2) étant raccordé à un dispositif d'affichage et/ou à l'électronique du véhicule.

7. Dispositif de déplacement (20) selon la revendication 6, **caractérisé en ce que** le dispositif d'actionnement (22) comprend un levier à poignée de traction (9) qui comprend un premier moyen d'encliquetage (11), qui se met en prise, lorsque le dispositif de verrouillage (21) se trouve dans une position verrouillée, dans un second moyen d'encliquetage disposé sur le coulisseau (31), et
**en ce que** le capteur de blocage (S2) est disposé de telle sorte qu'il détecte la position de mise en prise des moyens d'encliquetage.

8. Dispositif de déplacement (20) selon la revendication 7, **caractérisé en ce que** les premiers moyens d'encliquetage sont un évidement d'encliquetage (11) et les seconds moyens d'encliquetage (12) sont un élément de guidage (10) doté d'une fente à travers laquelle le levier à poignée de traction (9) est enfoncé.

9. Dispositif de déplacement (20) selon la revendication 7 ou 8, **caractérisé en ce que** le dispositif d'actionnement (22) comprend un dispositif d'entraînement pouvant être commandé à distance (13) et **en ce que** le capteur de détection (S2) est disposé sur le dispositif d'entraînement (13).

10. Dispositif de déplacement (20) selon la revendication 9, **caractérisé en ce que** le dispositif d'entraînement comporte au moins un moteur à fluide sous pression (13), qui s'applique contre le levier d'ouverture (9).

11. Dispositif de déplacement (20) selon l'une quelconque des revendications 1 à 10, **caractérisé par** au moins un capteur de charge (S4) destiné à détecter la charge de la sellette reposant sur la sellette d'attelage (30), le capteur de charge (S4) étant raccordé à un dispositif d'affichage et/ou à l'électronique du véhicule.

12. Dispositif de déplacement (20) selon la revendication 11, **caractérisé en ce que** le capteur de charge (S4) est disposé sur le coulisseau (31) sous les moyens de fixation de la sellette d'attelage (30).

13. Dispositif de déplacement (20) selon l'une quelconque des revendications 1 à 12, **caractérisé par** au moins un capteur de position (S3) destiné à détecter la position du coulisseau (31) par rapport aux rails de guidage (14), le capteur de position (S3) étant raccordé à un dispositif d'affichage et/ou à l'électronique du véhicule.

14. Dispositif de déplacement (20) selon la revendication 13, **caractérisé en ce que** le capteur de position (S3) est un capteur de distance.

15. Dispositif de déplacement (20) selon la revendication 13, **caractérisé par** un dispositif d'entraînement (50) destiné à déplacer le coulisseau (31) sur les rails de guidage (14).

16. Dispositif de déplacement selon la revendication 15, **caractérisé en ce que** le dispositif d'entraînement (50) comprend au moins une broche d'entraînement (51), le capteur de position (S3) étant un dispositif de mesure de l'angle de rotation.

17. Dispositif de déplacement selon la revendication 15, **caractérisé en ce que** le dispositif d'entraînement (50) comporte une unité motrice électroniquement régulée.

18. Dispositif de déplacement selon les revendications 12 et 17, **caractérisé en ce que** l'unité motrice est conçue pour déplacer le coulisseau (31) en fonction de la charge de la sellette déterminée par le capteur de charge.

19. Dispositif de déplacement (20) selon l'une quelconque des revendications 1 à 17, **caractérisé en ce que** les capteurs (S1 à S4) sont des capteurs inductifs, des capteurs magnétiques, des capteurs de force, des capteurs de pression ou des capteurs à bobine.
